# EUROPEAN PATENT SPECIFICATION

(11) **EP 3 519 218 B1**
(45) Date of publication and mention of the grant of the patent: **29.07.2020**
(21) Application number: 17794661.3
(22) Date of filing: 27.09.2017
(51) Int. Cl.: B60J 5/06, B60J 5/08, E05B 65/00, E05B 81/00

(54) **VEHICLE HAVING AT LEAST ONE LOCKABLE DOOR**
FAHRZEUG MIT MINDESTENS EINER VERRIEGELBAREN TÜR
VÉHICULE COMPORTANT AU MOINS UNE PORTE VERROUILLABLE

(30) Priority: 27.09.2016 DK PA201600568; 14.03.2017 DK BA201700028 U
(43) Date of publication of application: 07.08.2019
(73) Proprietor: Stokbro BYG Invest/Jeppe Stokbro, 2500 Valby (DK); Stokbro, Jeppe, 2500 Valby (DK)
(72) Inventor: STOKBRO, Jeppe, 2500 Valby (DK)
(74) Representative: Høiberg P/S
(86) International application number: PCT/DK2017/000018
(87) International publication number: WO 2018/059633

(56) References cited:
- EP-A2- 1 084 907
- WO-A1-2016/124672
- US-A1- 2004 000 797

## Description

This invention relates to a vehicle having at least one lockable door and a key, said door being locked or unlocked by the key, where each door is arranged in an opening being carved in a wall in the vehicle, said opening further comprising a moveable motorized shutter, where a driving mechanism is adapted to move the shutter between an open or shielded position in the opening, where the movement of the shutter is determined by the key to the lockable door, said key has a number of positions adapted to determine the opening or shielding position of the shutter, or the movement of the shutter is determined independent of the key to the lockable door, where a first position of the key opens the shutter when the lockable door is unlocked and a second position of the key shields the opening when the lockable door is locked.

EP 1 084 907 A2 discloses a protective device for the interior of a motor vehicle where a drive mechanism is adapted to lock or unblock the shutter

In WO 2016/124672 A1 the operation of the motorized shutter is operated independently of a door in the vehicle.

It is therefore an object of the invention to provide a more flexible and convenient operation of the motorized shutter.

Further it is an objective to provide additional security against theft and burglary.

The object is fulfilled with a vehicle of the type defined in claim 1.

In this way goods inside the vehicle can be protected against theft, which can be the case, if the vehicle is left unobserved, e.g. if the vehicle is used to move items from or to an apartment leaving the vehicle unobserved.

Further it is possible to reduce heat being transferred from the outside to the inside of the trailer.

An expedient embodiment is defined in claim 2.

The invention will now be explained in connection with the drawing on which
Fig. 1 illustrates, seen from behind, a vehicle with an open door with a motorized shutter in a first position, whereas
Fig. 2 illustrates the vehicle on fig. 1 but having the motorized shutter in another position.

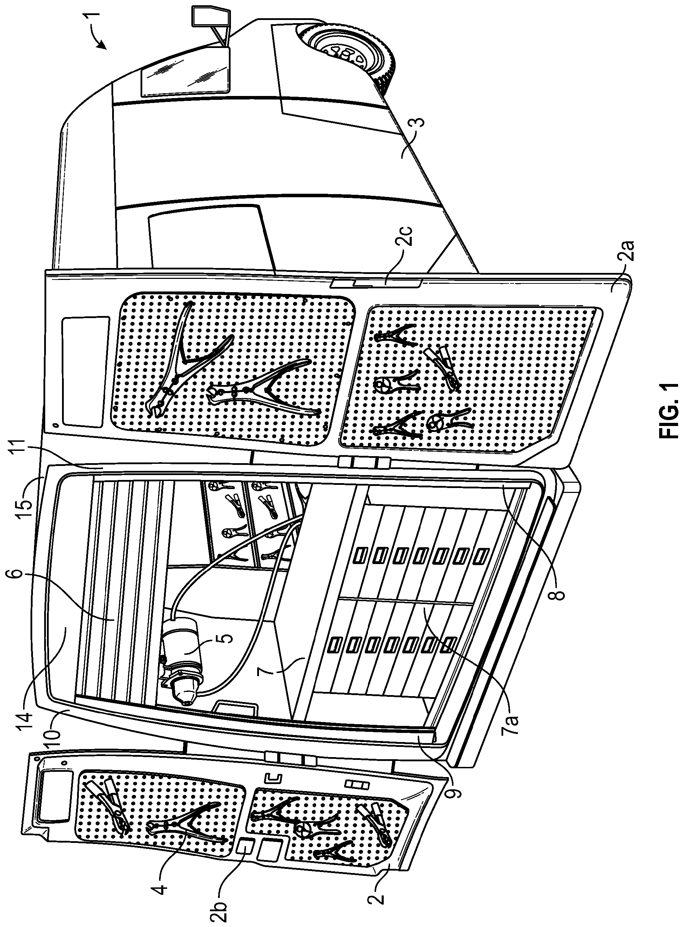

On fig. 1, 1 denotes a vehicle, here shown as a service car with a door, said door has, as shown, two halves 2,2a with a lock 2b, 2c. 3 denotes a side door. It is noted that the vehicle also could be a refrigerated trailer, a van, a truck or the like.

As it can be seen the door 2 of the service car accommodates tools 4, a machine 5 and a rack 7 with drawers 7a.

6 denotes a flexible moveable motorized shutter in form of a curtain, that here, for illustration purpose, is shown partly rolled-down, but normally with open doors is hidden behind an upper edge 14 up by the roof 15 of the vehicle. Behind the edge a driving mechanism (not shown) is adapted to move the shutter, said driving mechanism can be controlled by a not shown motor.

10, 11 denotes small edges behind which guiding rails 8,9, are used to leading the curtain.

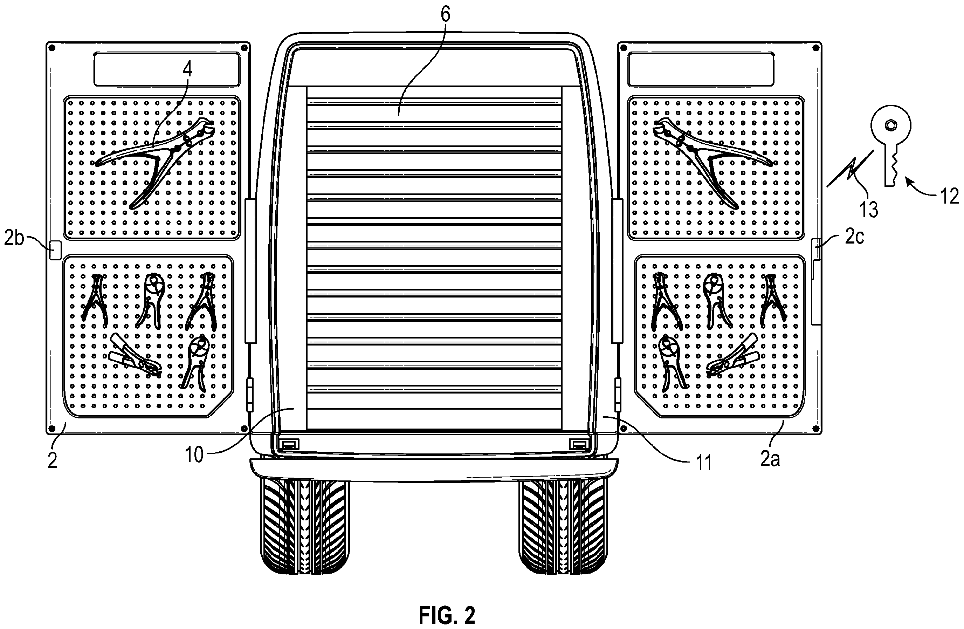

On fig. 2 the moveable shutter 6 is shown but now fully rolled down. The door 2, 2a can with the shutter be either locked or unlocked.

On fig 2, a key is denoted 12 that is adapted to lock or unlock the door 2, 2a, but also such that the key can also control the motorized shutter 6.

Additionally, the motorized shutter can be controlled independently of the key. The function of the door and the motorized shutter is so that the key can provide different positions namely:
1) The motorized shutter opens when the lockable door is unlocked
2) The motorized shutter shields the opening when the lockable door is locked
3) The motorized shutter shields the opening when the lockable door is unlocked.

The third position is feasible if the vehicle is a truck used to move furniture's from or to an apartment, where the vehicle in periods is unguarded.

Further in case that the vehicle is a refrigerated trailer, then heat from the environment can be limited.

## Claims

1. Vehicle (1) having at least one lockable door (2) and a key (12), said door being locked or unlocked by the key (12), where each door is arranged in an opening being carved in a wall in the vehicle, said opening further comprising a moveable motorized shutter (6), where a driving mechanism is adapted to move the shutter between an open or shielded position in the opening, **characterised in that** the movement of the shutter is determined by the key (12) to the lockable door, said key has a number of positions adapted to determine the opening or shielding position of the shutter, or the movement of the shutter is determined independent of the key to the lockable door, where a first position of the key opens the shutter when the lockable door is unlocked and a second position of the key shields the opening when the lockable door is locked, and **in that** a third position of the key moves the shutter to shielding after the lockable door has been unlocked.

2. Vehicle according to claim 1, **characterized in, that** the key is a remote-control type.

## Patentansprüche

1. Fahrzeug (1) mit mindestens einer verriegelbaren Tür (2) und einem Schlüssel (12), wobei die Tür durch den Schlüssel (12) verriegelt oder entriegelt wird, wobei jede Tür in einer Öffnung angeordnet ist, die in eine Wand in dem Fahrzeug geschnitten ist, wobei die Öffnung ferner einen beweglichen motorisierten Rollladen (6) umfasst, wobei ein Antriebsmechanismus dazu ausgelegt ist, den Rollladen zwischen einer offenen oder abgeschirmten Position in der Öffnung zu bewegen, **dadurch gekennzeichnet, dass** die Bewegung des Rollladens durch den Schlüssel (12) zu der verriegelbaren Tür bestimmt wird, wobei der Schlüssel eine Anzahl von Positionen aufweist, die dazu ausgelegt sind, die öffnende oder abschirmende Position des Rollladens zu bestimmen, oder die Bewegung des Rollladens wird unabhängig von dem Schlüssel zu der verriegelbaren Tür bestimmt, wobei eine erste Position des Schlüssels den Rollladen öffnet, wenn die verriegelbare Tür entriegelt wird, und eine zweite Position des Schlüssels die Öffnung abschirmt, wenn die Tür verriegelt wird, und dadurch, dass eine dritte Position des Schlüssels den Rollladen zum Abschirmen bewegt, nachdem die verriegelbare Tür entriegelt worden ist.

2. Fahrzeug nach Anspruch 1, **dadurch gekennzeichnet, dass** der Schlüssel ein Fernsteuerungstyp ist.

## Revendications

1. Véhicule (1) ayant au moins une porte verrouillable (2) et une clé (12), ladite porte étant verrouillée ou déverrouillée par la clé (12), où chaque porte est agencée dans une ouverture étant découpée dans une paroi dans le véhicule, ladite ouverture comprenant en outre un volet motorisé mobile (6), où un mécanisme d'entraînement est adapté pour déplacer le volet entre une position ouverte ou protégée dans l'ouverture,
**caractérisé en ce que** le mouvement du volet est déterminé par la clé (12) sur la porte verrouillable, ladite clé a un nombre de positions adaptées pour déterminer la position d'ouverture ou de protection du volet, ou le mouvement du volet est déterminé indépendamment de la clé sur la porte verrouillable, où une première position de la clé ouvre le volet lorsque la porte verrouillable est déverrouillée et une deuxième position de la clé protège l'ouverture lorsque la porte verrouillable est verrouillée, et **en ce qu'**une troisième position de la clé déplace le volet en position de protection après que la porte verrouillable a été déverrouillée.

2. Véhicule selon la revendication 1, **caractérisé en ce que** la clé est d'un type télécommande.
